# EUROPEAN PATENT APPLICATION

(11) **EP 2 704 126 A2**
(43) Date of publication of application: **05.03.2014**
(21) Application number: 13182386.6
(22) Date of filing: 30.08.2013
(51) Int. Cl.: G08G 5/00

(54) **Methods for determining suitable waypoint locations**

(30) Priority: 31.08.2012 US 201213601036
(71) Applicant: GE Aviation Systems LLC, Grand Rapids, MI 49512-1991 (US)
(72) Inventor: Kolbe, Dashiell Matthews, Grand Rapids, MI Michigan 49512 (US); Loyal, Brian Jacob, Grand Rapids, MI Michigan 49512 (US); Sugimoto, Philip Dewing, Grand Rapids, MI Michigan 49512 (US); Conrardy, Peter Jacob, Pinellas, FL Florida 33782 (US)
(74) Representative: Williams, Andrew Richard

(57) **Abstract**

Methods for determining suitable locations for placement of one or more flight plan (52) waypoints (54) for an aircraft within a volume of space (50). Such methods may include reducing the volume of space to be analyzed and analyzing the reduced volume (67) of the volume of space for suitable waypoint locations according to predetermined suitability criteria.

## Description

### BACKGROUND

Contemporary aircraft may include a flight management system (FMS). The FMS automates a wide variety of in-flight tasks and one of its primary functions is in-flight management of the flight plan. The flight plan may be modeled as a trajectory that can be comprised of a plurality of waypoints. Often alternative waypoints or future waypoints need to be determined and the determination of such waypoints may be a complex process as the possibilities are nearly endless.

### BRIEF DESCRIPTION

In one embodiment, the invention relates to a method for determining suitable locations for placement of a flight plan waypoint for an aircraft within a volume of space, including identifying a first boundary within the volume of space based on a terrain database, identifying a second boundary within the volume of space based on a performance envelope for the aircraft, defining a reduced volume of the volume of space between the first and second boundaries, and analyzing the reduced volume of the volume of space for suitable waypoint locations according to predetermined suitability criteria.

In another embodiment, the invention relates to a method for determining suitable locations for placement of a flight plan waypoint for an aircraft within a volume of space, including reducing the volume of space for analysis by removing impossible to fly portions of the volume of space based on a terrain database and a performance envelope of the aircraft to define a reduced volume of space, reducing the reduced volume of space for analysis by removing undesirable to fly portions of the reduced volume of space to define an acceptable volume of space, and analyzing the acceptable volume of the volume of space for suitable waypoint locations according to predetermined suitability criteria.

### BRIEF DESCRIPTION OF THE DRAWINGS

In the drawings:
Figure 1 is a perspective view of an aircraft and a ground station in which embodiments of the invention may be implemented;
Figure 2 is a schematic view of a visual illustration of an exemplary volume of space in which suitable locations for placement of a flight plan waypoint for an aircraft may be determined according to an embodiment of the invention;
Figure 3 is a schematic view of a visual illustration of an exemplary volume of space with a reduced volume of space defined according to an embodiment of the invention;
Figure 4 is a schematic view of a visual illustration of an exemplary volume of space with an acceptable volume of space defined according to an embodiment of the invention; and
Figure 5 is a schematic view of a visual illustration of an exemplary volume of space being analyzed according to an embodiment of the invention.

### DETAILED DESCRIPTION

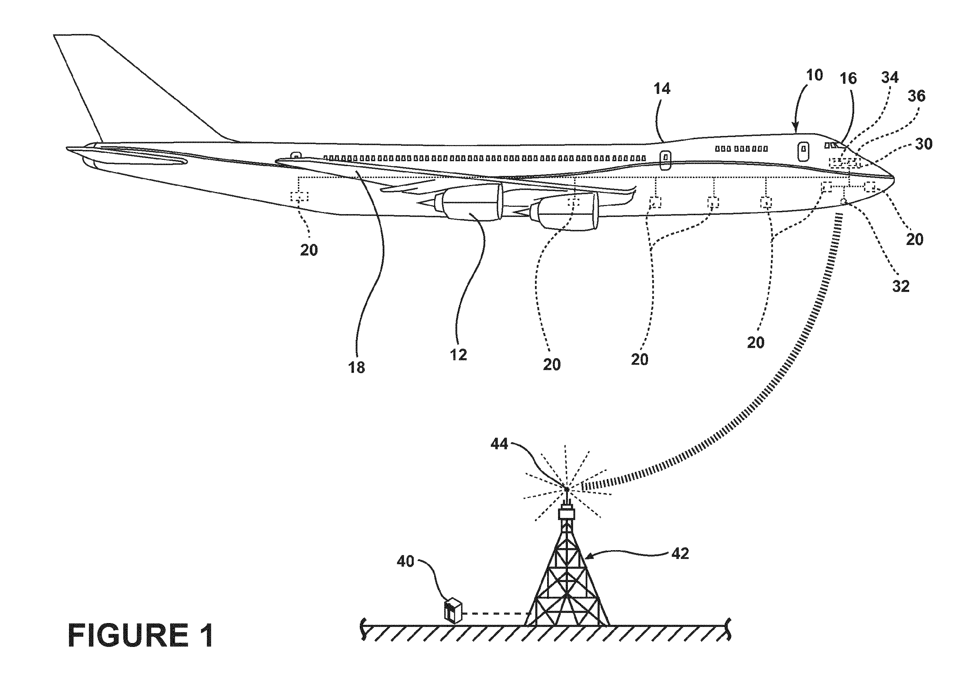

Figure 1 depicts an aircraft 10 that may execute embodiments of the invention and may include one or more propulsion engines 12 coupled to a fuselage 14, a cockpit 16 positioned in the fuselage 14, and wing assemblies 18 extending outward from the fuselage 14. A plurality of aircraft systems 20 that enable proper operation of the aircraft 10 may be included as well as a controller 30, and a communication system having a wireless communication link 32. The controller 30 may be operably coupled to the plurality of aircraft systems 20. The controller 30 may also be connected with other controllers of the aircraft 10. The controller 30 may include memory 34, the memory 34 may include random access memory (RAM), read-only memory (ROM), flash memory, or one or more different types of portable electronic memory, such as discs, DVDs, CD-ROMs, etc., or any suitable combination of these types of memory. The controller 30 may include one or more processors 36, which may be running any suitable programs. The controller 30 may be a portion of an FMS or may be operably coupled to the FMS.

A computer searchable database of information may be stored in the memory 34 and accessible by processor 36. The processor 36 may run a set of executable instructions to display the database or access the database. Alternatively, the controller 30 may be operably coupled to a database of information. For example, such a database may be stored on an alternative computer or controller. It will be understood that the database may be any suitable database, including a single database having multiple sets of data, multiple discrete databases linked together, or even a simple table of data. It is contemplated that the database may incorporate a number of databases or that the database may actually be a number of separate databases.

The database may store data that may include geo-specific terrain, man-made objects including runway and airport layouts, and additional data including aircraft traffic information geo-political information, hydrological information, and no-fly zones. The database may also include runway data, aircraft performance data, engine performance data, current weather conditions, and historical performance data. This data may be stored as performance attributes of the aircraft, geographic constraints, and weather constraints.

Alternatively, it is contemplated that the database may be separate from the controller 30 but may be in communication with the controller 30 such that it may be accessed by either the controller 30. For example, it is contemplated that the database may be contained on a portable memory device and in such a case, the aircraft 10 may include a port for receiving the portable memory device and such a port would be in electronic communication with controller 30 such that controller 30 may be able to read the contents of the portable memory device. It is also contemplated that the database may be updated through the wireless communication link 32 and that in this manner, real time information such as information regarding air traffic and weather conditions may be included in the database and may be accessed by the controller 30.

Further, it is contemplated that such a database may be located off the aircraft 10 at a location such as airline operation center, flight operations department control, or another location. The controller 30 may be operably coupled to a wireless network over which the database information may be provided to the controller 30. For example, the weather data may be obtained from a weather database, which may contain real-time weather data or forecasted weather data. Such weather databases may contain information regarding certain weather-related phenomena (e.g., wind speed, wind direction, temperature, among others) and data pertaining to visibility (e.g., foggy, cloudy, etc.), precipitation (rain, hail, snow, freezing rain, etc.) and other meteorological information. Because air temperature, wind direction, and wind speed must be accounted for in trajectory calculations to ensure that the aircraft can accurately conform to the desired trajectory, the weather database may include 3-D real-time temperature and wind models of the local airspace as well as 4-D forecasted data. The weather database may store such real-time or forecasted weather data based at a specific latitude, longitude, and altitude.

While a commercial aircraft has been illustrated, it is contemplated that embodiments of the invention may be implemented anywhere including in a computer 40 at a ground system 42. Furthermore, database(s) as described above may also be located in a destination server or a computer 40, which may be located at and include the designated ground system 42. Alternatively, the database may be located at an alternative ground location. The ground system 42 may communicate with other devices including the controller 30 and databases located remote from the computer 40 via a wireless communication link 44. The ground system 42 may be any type of communicating ground system 42 such as an airline control or flight operations department.

One of the controller 30 and the computer 40 may include all or a portion of a computer program having an executable instruction set for determining suitable locations for placement of a flight plan waypoint for the aircraft 10 within a volume of space. Regardless of whether the controller 30 or the computer 40 runs the program for determining suitable locations, the program may include a computer program product that may include machine-readable media for carrying or having machine-executable instructions or data structures stored thereon. Such machine-readable media may be any available media, which can be accessed by a general purpose or special purpose computer or other machine with a processor. Generally, such a computer program may include routines, programs, objects, components, data structures, algorithms, etc. that have the technical effect of performing particular tasks or implement particular abstract data types. Machine-executable instructions, associated data structures, and programs represent examples of program code for executing the exchange of information as disclosed herein. Machine-executable instructions may include, for example, instructions and data, which cause a general purpose computer, special purpose computer, or special purpose processing machine to perform a certain function or group of functions.

It will be understood that the aircraft 10 and computer 40 merely represents two exemplary embodiments that may be configured to implement embodiments of the invention. During operation, the aircraft 10 and/or the computer 40 may determine suitable locations for placement of a flight plan waypoint for the aircraft 10 within a volume of space. By way of non-limiting example, the controller 30 and/or the computer 40 may utilize inputs from a pilot, the database(s) and/or information from airline control or flight operations department to determine suitable locations for placement of a flight plan waypoint for the aircraft 10 within a volume of space. Once suitable waypoint locations are determined, they may be utilized in the flight plan of the aircraft 10. For example, if the controller 30 ran the program, then the suitable waypoint may be used by the FMS of the aircraft 10. Alternatively, if the computer 40 ran the program, then the suitable waypoint may be uploaded or otherwise relayed to the aircraft 10.

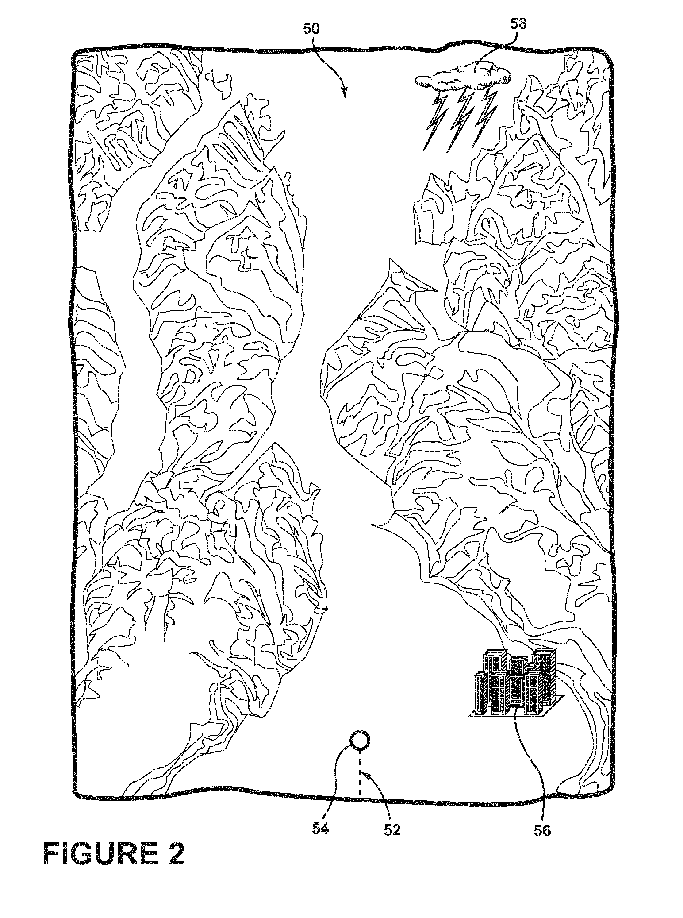

Figure 2 illustrates a visual representation of the terrain underlying a flight plan of an aircraft, such as the aircraft 10, which may be considered as a volume of space 50. It will be understood that the visual representation may be graphically illustrated in a variety of ways and that the visual representation may take any variety of forms including a 2D map, a 3D map, a topographical map, etc. and is not germane to embodiments of the invention and is merely being used for explanatory purposes. At least a portion of a flight plan 52 including one or more waypoints 54 has been displayed within the volume of space 50. The information forming the flight plan 52, including the information for the waypoint 54 may be provided by the pilot, one or more databases, and/or information from airline control or flight operations department. The volume of space 50 has also been illustrated as including man-made objects 56 and severe weather 58 such information may also be obtained from the pilot, one or more databases, and/or from airline control or flight operations department.

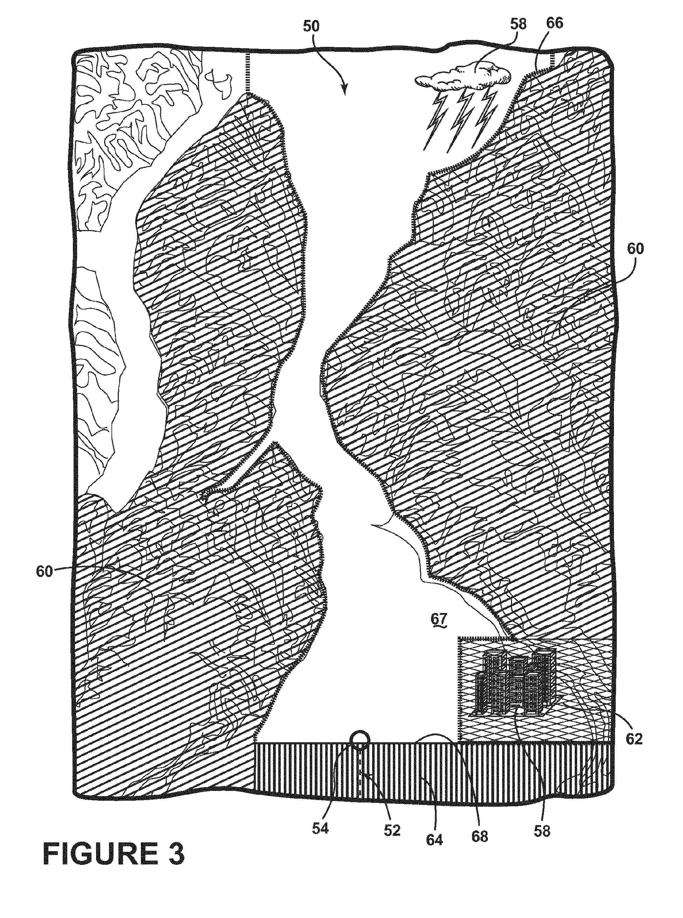

In determining suitable locations for placement of a flight plan waypoint for an aircraft within the volume of space 50 embodiments of the method may include reducing the volume of space 50 for analysis by removing impossible to fly portions of the volume of space 50 based on a terrain database and a performance envelope of the aircraft to define a reduced volume of space. Referring to Figure 3, impossible to fly portions include the portions 60, the portion 62, and the portion 64. Based on the terrain database the portions 60 and the portion 62 may be determined to be impossible to fly portions. More specifically, the portions 60 have been illustrated as including mountainous terrain that would prevent an aircraft from safely flying in such an area. Further, the portion 62 has been illustrated as including man-made objects such as skyscrapers, which would prevent an aircraft from safely flying in such an area. In this manner, it will be understood that reducing the volume of space 50 based on a terrain database may include the reduction based on geo-specific terrain information and man-made object information. Further, such a determination may be made based on the prior portions of the flight plan 52 and the waypoint 54.

The portion 64 may be determined to be impossible to fly based on the performance envelope of the aircraft flying the flight plan 52. Such a determination may be made based on aircraft performance data including a performance envelope of the aircraft, engine performance data, historical performance data as well as the prior portions of the flight plan 52 and the waypoint 54. The prior portions of the flight plan 52 may be user selected, uploaded from the FMS, or uploaded from an airline operations center, the waypoint 54 may also include a current location of the aircraft 10. The information related to both the waypoint 54 and the prior portions of the flight plan 52 may be utilized by the controller 30 and/or the computer 40 to determine the impossibility of flying in particular portions of the volume of space 50. The prior portions of the flight plan 52 may give additional information to the controller 30 and/or the computer 40 to work with related to the heading of the aircraft 10 with respect to the waypoint 54. The controller 30 and/or the computer 40 may determine if the locations is impossible to fly by determining if aircraft or airspace parameters would be exceeded if the aircraft 10 traveled the flight plan including that volume of space.

It will be understood that portions may be determined based on a variety of constraints and any number of combinations of such constraints. For example, a portion may be excluded based on the terrain database in combination with the performance envelope of the aircraft flying the flight plan 52. Further, additional constraints may be considered such as a pilot's or airline's constraints. The pilot's or airline's constraints may also be considered by the controller 30 and/or the computer 40 in determining suitable locations for placement of a flight plan waypoint. For example, a pilot's flight preferences may be one type of constraint. If the pilot prefers not to fly within a certain range of a mountain, then such information may be utilized in determining the suitable locations for placement of a flight plan waypoint. If the constraints would be exceeded for a particular location, then such location may be determined to be unsuitable and may be removed from the volume of space 50.

In implementation, the information or one or more constraints may be converted to an algorithm, which may be converted to a computer program comprising a set of executable instructions, which may be executed by the controller 30 and/or the computer 40. In this way, one or more particular types of areas may be compared to the constraints and a determination may be made if the area satisfies the constraints. If so, the area in the volume of space 50 may be considered suitable. If not, the area in the volume of space 50 may be considered unsuitable and may be removed from the volume of space 50. The reduction of the volume of space 50 in the above manners defines a reduced volume of space 67.

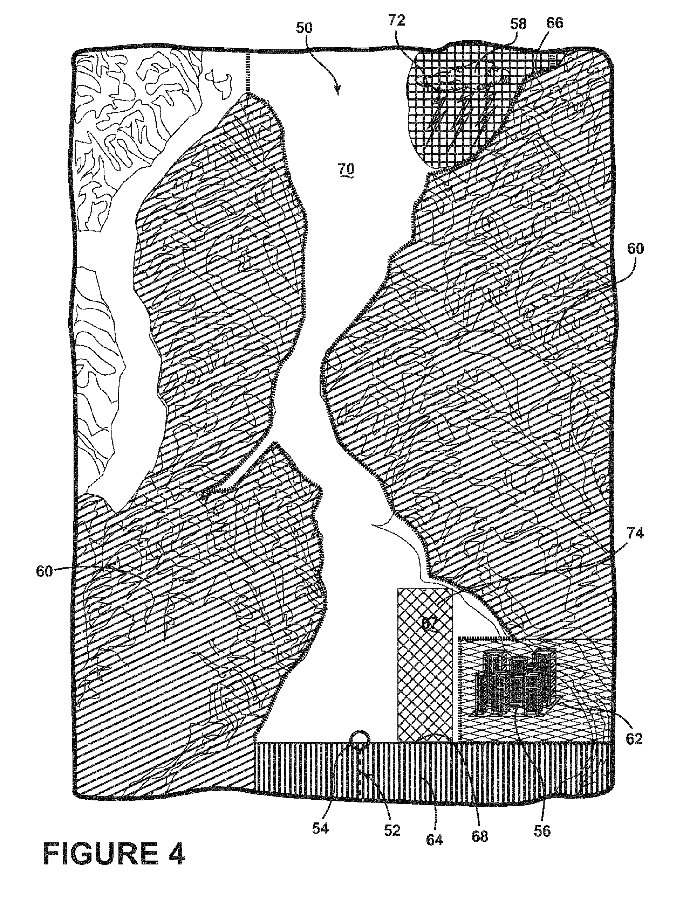

Figure 4 illustrates that the reduced volume of space 67 may be further reduced for analysis by removing undesirable to fly portions of the reduced volume of space 67 to define an acceptable volume of space 70. The undesirable to fly portions may include locations of undesirable weather based on a weather database. For example, an undesirable to fly portion 72 has been illustrated where the severe weather 58 is included in the volume of space 50. Further, the undesirable to fly portions of the reduced volume may include no-fly zones based on a no-fly database. By way of additional example, an undesirable to fly portion 74 has been illustrated in the volume of space 50 and may correlate with any areas specified in the no-fly database including known skydiving locations, military no-fly zones, geo-political no-fly zones, etc. Air traffic information may also be used to define various no-fly zones and such areas may be removed from the reduced volume of space 67 to define the acceptable volume of space 70.

The acceptable volume of space 70 may then be analyzed for suitable waypoint locations according to predetermined suitability criteria. Such predetermined suitability criteria may include at least one of destination arrival time, weather preferences, and proximity preferences, speed preferences, bank angle preferences, etc. The destination arrival time may include a range of suitable times for the destination arrival. Weather preferences may include a preferred distance from inclement weather. Proximity preferences may include staying out of no-fly zones such as military operations areas or a preferred distance from high-altitude features. Taking into account any amount of the information above, the controller 30 and/or computer 40 may determine suitable locations for placement of a flight plan waypoint.

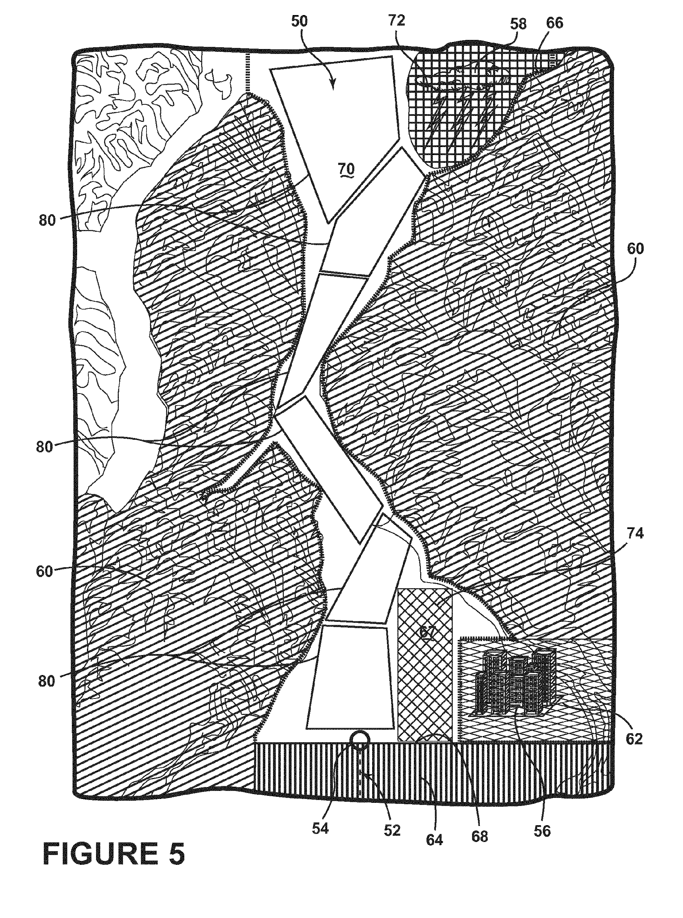

By way of non-limiting example, Figure 5 illustrates one example of analyzing the acceptable volume of space 70 for suitable waypoint locations according to predetermined suitability criteria. More specifically various subportions of the volume of space or volumes 80 may be analyzed in a step-wise searching according to the predetermined suitability criteria. In implementation, the one or more suitability criteria may be converted to an algorithm, which may be converted to a computer program comprising a set of executable instructions, which may be executed by the controller 30 and/or the computer 40. In this way, one or more volumes may be compared to the suitability criteria and a determination may be made if the volumes 80 or a portion of the volumes 80 satisfy the suitability criteria. If so, the volumes 80 or portions of the volumes 80 may be considered suitable locations for placement of a flight plan waypoint.

In this manner, determining suitable locations for placement of a flight plan waypoint based on at least one suitability criteria may include the controller 30 and/or the computer 40 comparing at least a portion of the flight plan 52 with a flight plan waypoint within the acceptable volume of space 70 to at least one suitability criteria. For example, this may include comparing a trajectory of the aircraft along the flight plan 52 with a flight plan waypoint within the acceptable volume of space 70 against the at least one suitability criteria. This may include generating a predicted trajectory based on at least one of weather, terrain, fixed obstacles, and variable obstacles, and flight characteristics or performance attributes of the aircraft 10. Embodiments of the invention may use a database of terrain, weather, and additional information to generate the predicted trajectory to be compared with the at least one suitability criteria. It is contemplated that determining suitable locations for placement of a flight plan waypoint may include determining suitable locations while the aircraft 10 is being flown along the flight plan 52. Thus, current time and location of the aircraft 10 may also be considered in predicting the trajectory of the aircraft 10.

By way of non-limiting example, once the trajectory of the aircraft 10 has been predicted it may be compared to at least one suitability criteria. As one example, the predicted trajectory may be compared with a destination arrival time. If the controller 30 and/or the computer 40 determines that at least a portion of the flight plan 52 with a flight plan waypoint within the acceptable volume of space 70 would cause the destination arrival time to not be satisfied, then it may be determined that the location of the flight plan waypoint in such a volume of space is unsuitable for placement of a flight plan waypoint.

The term "satisfies" the at least one suitability criteria is used herein to mean that the predicted trajectory with the waypoint within the acceptable volume of space 70 satisfies the predetermined at least one suitability criteria, such as being equal to, less than, or greater than the at least one suitability criteria. It will be understood that such a determination may easily be altered to be satisfied by a positive/negative comparison or a true/false comparison. For example, less than the at least one suitability criteria can easily be satisfied by applying a greater than test when the data is numerically inverted. It will be understood that in determining unsuitability or suitability of a portion of the flight plan 52 with a flight plan waypoint within the acceptable volume of space 70 that unsuitability criteria may be used. In such an instance, if a portion of the flight plan 52 with a flight plan waypoint within the acceptable volume of space 70 fails the unsuitability criteria, it is suitable.

It will be understood that the method of determining suitable locations for placement of a flight plan waypoint for an aircraft within a volume of space is flexible and that embodiments of the method described above are merely for explanatory purposes. For example, determining suitable locations for placement of a flight plan waypoint for an aircraft may include identifying a first boundary 66 within the volume of space 50 based on information in a terrain database. In the illustrated example, such a first boundary 66 may exclude the portions 60 and the portion 62 from the volume of space 50. A second boundary 68 may be identified within the volume of space 50 based on a performance envelope for the aircraft in the illustrated example such a second boundary 68 may exclude the portion 64 from the volume of space 50. In this manner, the first boundary 66 and the second boundary 68 may define the reduced volume of space 67. While the first boundary 66 and the second boundary 68 have been shown as having sharp boundary lines it is contemplated that such boundary lines may be smoothed based on a performance envelope for the aircraft. Further, it is contemplated that the reduced volume of space 67 may be analyzed for suitable waypoint locations according to predetermined suitability criteria. For example, this may include step-wise searching a subportion of the reduced volume of space 67 for suitable waypoint locations according to the predetermined suitability criteria or any other suitable method of analyzing the reduced volume of space 67. Further, it is contemplated that the analyzing may include analyzing the reduced volume excluding or including the undesirable portions.

Further, it will be understood that while the Figures above reference a two dimensional map the embodiments of the invention are capable of determining suitable locations for placement of a flight plan waypoint for an aircraft within a volume of space that is three dimensional or four dimensional. By way of non-limiting example, in a three dimensional volume, the volume of space may change with height as a 5,000 foot ridge may not be a limiting factor at 30,000 feet but would be at 3,000 feet. Further, the ability to move the waypoint up or down in altitude may increase efficiency.

The above described embodiments provide a variety of benefits including that suitable locations for placement of a flight plan waypoint within a volume of space may be efficiently and quickly determined. The above described embodiments of the invention immediately assess unsuitable areas and remove them from the entire volume of space that is in contention for waypoint placement. Once impossible to fly and/or undesirable areas have been removed, the remaining reduced volume of airspace may be analyzed for waypoint placement. The above described embodiments determine the total airspace volume that can be used for waypoints before more computation is done, which removes additional computation and increases speed and performance by predicting airspace available before analysis is fully performed. The technical effect is that the above described embodiments lower computational power needed, as well as speed up determinations of suitable placement of a flight plan waypoint.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method for determining suitable locations for placement of a flight plan (52) waypoint (54) for an aircraft (10) within a volume of space (50), the method comprising:
identifying a first boundary within the volume of space based on a terrain database;
identifying a second boundary within the volume of space based on a performance envelope for the aircraft;
defining a reduced volume (67) of the volume of space between the first and second boundaries; and
analyzing the reduced volume (67) of the volume of space for suitable waypoint locations according to predetermined suitability criteria.

2. The method of claim 1, wherein the analyzing the reduced volume (67) of the volume of space (50) comprises step-wise searching the subportion of the reduced volume of the volume of space for suitable waypoint locations according to the predetermined suitability criteria.

3. The method of either of claim 1 or 2, wherein the predetermined suitability criteria comprises at least one of destination arrival time, weather preferences, and proximity preferences.

4. The method of any preceding claim, further comprising identifying undesirable portions (72,74) of the reduced volume (67) of the volume of space (50).

5. The method of claim 4, wherein the undesirable portions of the reduced volume (67) of the volume of space (50) comprise locations of undesirable weather based on a weather database.

6. The method of either of claim 4 or 5, wherein the undesirable portions of the reduced volume (67) of the volume of space (50) comprise no-fly zones based on a no-fly database.

7. The method of any of claims 4 to 6, wherein the analyzing the reduced volume of the volume of space comprises analyzing the reduced volume (67) of the volume of space (50) excluding the undesirable portions.

8. A method for determining suitable locations for placement of a flight plan (52) waypoint (54) for an aircraft (10) within a volume of space (50), the method comprising:
reducing the volume of space for analysis by removing impossible to fly portions (60,62,64) of the volume of space based on a terrain database and a performance envelope of the aircraft to define a reduced volume of space (67);
reducing the reduced volume of space (67) for analysis by removing undesirable to fly portions (72,74) of the reduced volume of space to define an acceptable volume of space (70); and
analyzing the acceptable volume of the volume of space for suitable waypoint locations according to predetermined suitability criteria.

9. The method of claim 8, wherein the analyzing the acceptable volume (70) comprises step-wise searching the acceptable volume of space for suitable waypoint locations according to the predetermined suitability criteria.

10. The method of either of claim 8 or 9, wherein the predetermined suitability criteria comprises at least one of destination arrival time, weather preferences, and proximity preferences.

11. The method of any of claims 8 to 10, wherein the undesirable to fly portions (72,74) comprise locations of undesirable weather based on a weather database.

12. The method of any of claims 8 to 11, wherein the undesirable to fly portions (72,74) the reduced volume comprise no-fly zones based on a no-fly database.
